Europäisches Patentamt

European Patent Office

Office européen des brevets

(19)

(11) **EP 0 601 557 B1**

(12) **FASCICULE DE BREVET EUROPEEN**

(45) Date de publication et mention
de la délivrance du brevet:
**17.07.1996 Bulletin 1996/29**

(51) Int. Cl.⁶: **B60C 23/06**

(21) Numéro de dépôt: **93119770.1**

(22) Date de dépôt: **08.12.1993**

(54) **Procédé de détection d'une baisse de pression des pneumatiques d'un véhicule**

Verfahren zum Erkennen von Reifendruckverlusten bei Fahrzeugen

Method of detecting a low pressure in the tyres of a vehicle

(84) Etats contractants désignés:
**DE ES FR GB IT**

(30) Priorité: **11.12.1992 FR 9215058**

(43) Date de publication de la demande:
**15.06.1994 Bulletin 1994/24**

(73) Titulaire: **COMPAGNIE GENERALE DES
ETABLISSEMENTS
MICHELIN - MICHELIN & CIE
F-63040 Clermont-Ferrand Cédex (FR)**

(72) Inventeur: **Pompier, Jean-Pierre
F-63530 Volvic (FR)**

(74) Mandataire: **Doussaint, Jean-Marie
MICHELIN & CIE
Service K. Brevets
23, Place des Carmes
63040 Clermont-Ferrand Cedex (FR)**

(56) Documents cités:
**EP-A- 0 291 217          AU-D- 4 363 672
DE-A- 3 236 594**

• **AUTOMOBILTECHNISCHE ZEITSCHRIFT vol. 94,
no. 6 , Juin 1992 pages 336 - 340 ROGER
WILLIAMS 'DWS-EIN NEUES
DRUCKVERLUSTSYSTEM FUR
AUTOMOBILREIFEN'**
• **PATENT ABSTRACTS OF JAPAN vol. 8, no. 32 (M-
275)(1469) 10 Février 1984 & JP-A-58 188 704
(SHIN NIPPONDENKI) 4 Novembre 1983**

## Description

La présente invention a pour objet un procédé de détection d'une baisse de pression des pneumatiques d'un véhicule ; plus précisément, l'invention concerne un procédé basé sur la mesure de la variation de dimension d'un pneumatique dont la pression diminue.

On sait qu'une pression de gonflage correcte des pneumatiques est indispensable à leur bon fonctionnement ; il est donc très important de surveiller cette pression ou - au moins - d'avertir le conducteur du véhicule d'une baisse de cette pression en dessous d'un seuil préétabli correspondant à un risque grave, comme la perte de contrôle du véhicule.

On sait aussi que lorsque la pression d'un pneumatique diminue, il s'affaisse légèrement, c'est-à-dire que la distance entre son axe et le sol diminue ; bien que la ceinture d'un pneumatique radial soit presque inextensible, sa circonférence apparente varie légèrement sous l'effet de l'écrasement ; on peut donc définir un rayon apparent ou rayon de roulement (fictif) calculé à partir de la circonférence de roulement (réellement mesurée, en relevant la distance au sol parcourue par un pneu qui se déplace d'un tour). On peut aussi définir la sensibilité S d'un pneumatique au dégonflement comme la diminution relative du rayon de roulement :

$$S=(R1-R2)/R1$$

où R1 et R2 sont les valeurs du rayon de roulement du pneumatique lorsqu'il est gonflé à des pressions p1 et p2, avec p2 inférieure à p1 et donc R2 inférieur à R1.

Il existe diverses méthodes de mesure des variations du rayon ou de la circonférence de roulement. L'une d'elles est basée sur le fait que, pour parcourir la même distance au sol avec une circonférence plus faible, la roue concernée tourne plus vite. On peut donc baser la mesure des diminutions du rayon de roulement sur le comptage des tours de roues. Toutefois, les variations de vitesse angulaire des roues peuvent avoir d'autres causes et notamment les différences de trajectoires dans les virages: pour pallier cet inconvénient, on compare les vitesses angulaires des roues deux à deux opposées en diagonale (voir par exemple le brevet FR-A-790 516).

Sur les véhicules modernes, ces mesures sont faites par des moyens électroniques (FR-A-2 568 519) qui peuvent être les mêmes que ceux des dispositifs dits antiblocage ou ABS (EP-A-0 291 217).

Cependant, la réduction de la circonférence d'un pneumatique radial sous l'effet d'une baisse de pression reste faible et sa mesure est donc délicate. On sait que la sensibilité d'un pneumatique au dégonflement, telle que définie plus haut ( S=dR/R ), varie beaucoup avec le couple appliqué à la roue concernée: sous couple freineur, la sensibilité est bien plus importante que sous couple moteur ou nul (ATZ Automobiltechnische Zeitschrift 94, no. 6, Juin 1992, pages 336-340, notamment dessin 3).

Conformément à la présente invention, un procédé de détection d'une baisse de pression de l'un des pneumatiques d'un véhicule est caractérisé en ce que l'on mesure la diminution éventuelle du rayon de roulement dudit pneumatique seulement pendant les périodes où il est soumis à un couple freineur, on calcule la diminution relative dudit rayon par rapport au rayon à la pression nominale, on compare cette diminution relative à un seuil prédéterminé et on déclenche une alarme si ledit seuil est dépassé.

La diminution du rayon de roulement est mesurée de préférence par une méthode connue basée sur la comparaison des vitesses angulaires des roues du véhicule.

Les périodes de mesure sous couple freineur à prendre en compte suivant l'invention sont déterminées par tout moyen représentatif de la décélération du véhicule : lorsque le conducteur freine, un contact "stop" est actionné et l'on peut le détecter ; sur un véhicule à moteur à essence, lorsque le conducteur cesse d'accélérer, une dépression se produit dans la conduite d'admission et un capteur sensible à la dépression peut donner un signal ; sur un moteur diésel, on peut détecter la réduction de l'admission du carburant ; dans tous les cas, le logiciel de comptage des tours de roues donne une loi d'évolution de leurs vitesses angulaires, et la dérivée de cette loi permet de mesurer toute décélération du véhicule.

Le seuil d'alerte est de l'ordre de 0,3% ; mais dans le but d'éliminer des alarmes intempestives, dues par exemple au blocage d'une roue ou à un dérapage, on écarte toute valeur de la mesure supérieure à environ 1%.

On va décrire des exemples de mise en oeuvre de l'invention donnés à titre non limitatif en se référant au dessin annexé sur lequel :

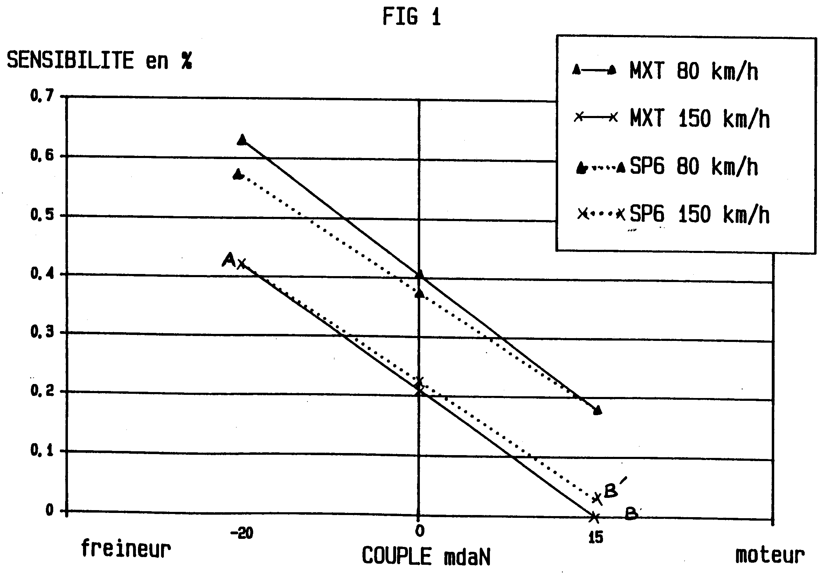

La fig. 1 est un diagramme illustrant diverses valeurs de la diminution relative du rayon de roulement, c'est-à-dire sensibilité, portées en ordonnées, suivant la vitesse du véhicule et la valeur du couple appliqué à la roue concernée.

La demanderesse a effectué plusieurs séries de mesures sur divers pneumatiques dont deux ont été retenus pour les explications qui vont suivre : il s'agit d'un MXT (Michelin) et d'un SP6 (Dunlop), tous les deux de dimension 175/70 R 13 ; les vitesses choisies sont 80 et 150 kilomètres à l'heure ; les couples appliqués sur les roues ont les valeurs suivantes :

    couple freineur -20 m daN
    couple nul
    couple moteur +15 m daN

La diminution relative du rayon de roulement est mesurée pour les pressions de 2,5 et 1,5 bar soit

$$S= (R2,5 - R1,5) / R2,5$$

Enfin, la charge verticale des roues est de 280 daN, soit 60% de la charge nominale suivant les normes ETRTO.

On constate que la sensibilité du pneumatique au dégonflement S est toujours plus importante sous couple freineur que sous couple nul ou sous couple moteur ; plus précisément, si l'on considère le point A (Fig. 1), on voit qu'à la vitesse de 150 km/h, sous un couple freineur de -20 m daN, les deux pneus présentent la même diminution relative du rayon de roulement (0,42%), valeur supérieure au seuil d'alerte (0,3%) tandis qu'à la même vitesse de 150 km/h, sous un couple moteur de +15 m daN, les deux pneus présentent des diminutions relatives du rayon de roulement qui sont respectivement de 0% pour le MXT et de 0,03% pour le SP6 (points B et B'), valeurs inférieures au seuil d'alerte (0,3%).

En conclusion, on voit sur cet exemple que pour deux pneumatiques différents placés dans les mêmes conditions de charge et de vitesse, une baisse de pression de 2,5 bar à 1,5 bar, soit 40%, déclenche une alarme sous couple freineur mais pas sous couple moteur.

L'exemple décrit concerne des pneumatiques de véhicules de tourisme, mais il est bien entendu que l'invention s'applique aussi avantageusement à d'autres types de pneumatiques (HR, VR, etc.), ainsi qu'à d'autres catégories de véhicules, et notamment aux poids lourds.

## Revendications

1. Procédé de détection d'une baisse de pression de l'un des pneumatiques d'un véhicule, caractérisé en ce que l'on mesure la diminution éventuelle du rayon de roulement dudit pneumatique seulement pendant les périodes où il est soumis à un couple freineur, on calcule la diminution relative dudit rayon par rapport au rayon à la pression nominale, on compare cette diminution relative à un seuil prédéterminé et on déclenche une alarme si le seuil est dépassé.

2. Procédé de détection d'une baisse de pression selon la revendication 1, caractérisé en ce que la diminution du rayon de roulement est mesurée par une méthode basée sur le comptage des tours de roues du véhicule et la comparaison des vitesses angulaires des roues deux à deux opposées en diagonale.

3. Procédé de détection d'une baisse de pression selon la revendication 1 ou 2, caractérisé en ce que les périodes de mesure sous couple freineur sont déterminées par la détection du fonctionnement du signal "stop" du véhicule.

4. Procédé de détection d'une baisse de pression selon la revendication 1 ou 2, caractérisé en ce que les périodes de mesure sous couple freineur sont déterminées par un capteur sensible à la dépression dans la tubulure d'admission d'un moteur à essence.

5. Procédé de détection d'une baisse de pression selon la revendication 1 ou 2, caractérisé en ce que les périodes de mesure sous couple freineur sont déterminées par tout moyen sensible à la réduction de l'admission de carburant dans un moteur diésel.

6. Procédé de détection d'une baisse de pression selon la revendication 1 ou 2, caractérisé en ce que les périodes de mesure sous couple freineur sont déterminées par la dérivée de la loi d'évolution de la vitesse angulaire des roues du véhicule.

7. Procédé de détection d'une baisse de pression selon l'une des revendications 1 à 6, caractérisé en ce que le seuil prédéterminé est de l'ordre de 0,3%.

8. Procédé de détection selon la revendication 7, caractérisé en ce que l'on écarte toute valeur de la diminution relative du rayon de roulement supérieure à 1%.

## Claims

1. A method for detecting a drop in pressure of one of the tyres of a vehicle, characterised in that the possible decrease in the rolling radius of said tyre is measured solely during the periods in which it is subject to braking torque, the relative decrease of said radius is calculated relative to the radius at rated pressure, this relative decrease is compared to a predetermined threshold and an alarm is triggered if the threshold is exceeded.

2. A method for detecting a drop in pressure according to Claim 1, characterised in that the decrease in the rolling radius is measured by a method based on the counting of the revolutions of the wheels of the vehicle and the comparison of the angular velocities of the wheels two-by-two diagonally opposed.

3. A method for detecting a drop in pressure according to Claim 1 or 2, characterised in that the measurement periods under braking torque are determined by the detection of the operation of the "stop" signal of the vehicle.

4. A method for detecting a drop in pressure according to Claim 1 or 2, characterised in that the measurement periods under braking torque are determined by a sensor sensitive to negative pressure in the intake tube of a petrol engine.

5. A method for detecting a drop in pressure according to Claim 1 or 2, characterised in that the measurement periods under braking torque are determined by any means sensitive to the reduction of the intake of fuel in a diesel engine.

6. A method for detecting a drop in pressure according to Claim 1 or 2, characterised in that the measurement periods under braking torque are determined by the derivative of the law of evolution of the angular velocity of the wheels of the vehicle.

7. A method for detecting a drop in pressure according to one of Claims 1 to 6, characterised in that the predetermined threshold is of the order of 0.3%.

8. A detection method according to Claim 7, characterised in that any value of the relative decrease of the rolling radius which is greater than 1% is eliminated.

**Patentansprüche**

1. Verfahren zum Erkennen des Druckverlustes eines Reifens eines Fahrzeugs, dadurch gekennzeichnet, daß man die mögliche Verringerung des Rollradius des genannten Reifens nur während der Perioden mißt, in denen er einem Bremsmoment unterzogen ist, daß man die relative Verringerung des genannten Radius in Bezug auf den Radius bei Nenndruck berechnet, daß man diese relative Verringerung mit einem vorbestimmten Schwellenwert vergleicht, und daß man einen Alarm auslöst, wenn der genannte Schwellenwert überschritten wird.

2. Verfahren zum Erkennen des Druckverlustes nach Anspruch 1, dadurch gekennzeichnet, daß die Verringerung des Rollradius durch eine Methode gemessen wird, die auf der Zählung der Umdrehungen des Fahrzeugrades und auf dem Vergleich der Winkelgeschwindigkeiten der Räder beruht, die einander diagonal paarweise gegenüberliegen.

3. Verfahren zum Erkennen des Druckverlustes nach Anspruch 1 oder 2, dadurch gekennzeichnet, daß bei Vorliegen eines Bremsmomentes die Meßperioden durch die Erfassung der Funktion des "Stopp"-Signals des Fahrzeuges bestimmt werden.

4. Verfahren zum Erkennen des Druckverlustes nach Anspruch 1 oder 2, dadurch gekennzeichnet, daß bei Vorliegen eines Bremsmomentes die Meßperioden durch einen Meßfühler bestimmt werden, der auf den Niederdruck im Ansaugrohr eines Benzinmotors anspricht.

5. Verfahren zum Erkennen des Druckverlustes nach Anspruch 1 oder 2, dadurch gekennzeichnet, daß bei Vorliegen eines Bremsmomentes die Meßperioden durch jedes Mittels bestimmt werden, das auf die Verringerung des Zustroms von Treibstoff in einen Dieselmotor anspricht.

6. Verfahren zum Erkennen des Druckverlustes nach Anspruch 1 oder 2, dadurch gekennzeichnet, daß bei Vorliegen eines Bremsmomentes die Meßperioden durch die Ableitung des Verlaufes der Entwicklung der Winkelgeschwindigkeit der Fahrzeugräder bestimmt werden.

7. Verfahren zum Erkennen eines Druckverlustes nach einem der Ansprüche 1 bis 6, dadurch gekennzeichnet, daß der vorbestimmte Schwellenwert in der Größenordnung von 0,3 % liegt.

8. Verfahren zum Erkennen nach Anspruch 7, dadurch gekennzeichnet, daß man jeden Wert der relativen Verringerung des Abrollradius ausscheidet, der größer ist als 1%.

FIG 1

SENSIBILITE en %

COUPLE mdaN

moteur

freineur

Légende:
- ▲—— MXT 80 km/h
- ×—— MXT 150 km/h
- ▲···· SP6 80 km/h
- ×···× SP6 150 km/h